# EUROPEAN PATENT APPLICATION

(11) **EP 4 451 094 A1**
(43) Date of publication of application: **23.10.2024**
(21) Application number: 24382401.8
(22) Date of filing: 17.04.2024
(51) Int. Cl.: G06F 3/01

(54) **SYSTEM, METHOD AND COMPUTER PROGRAM FOR GENERATING AN IMMERSIVE DRIVING EXPERIENCE OF AN ACTUAL VEHICLE IN A VIRTUAL ENVIRONMENT**

(30) Priority: 21.04.2023 ES 202330317
(71) Applicant: Seat, S.A., 08760 Martorell (ES)
(72) Inventor: VALENCIA SANCHEZ, Ivan, 08760 MARTORELL (ES)
(74) Representative: Pons

(57) **Abstract**

The present invention relates to a system for generating an immersive driving experience of an actual vehicle (V) in a virtual environment, comprising:
- virtual reality goggles (G);
- positioning units (P1, P2) to detect the positions of the actual vehicle (V) and of the virtual reality goggles (G) with respect to the actual vehicle (V); and
- a computational entity (S) to generate mixed images that combine those of the virtual environment with acquired images or representative images thereof, of elements of the actual vehicle (V) or of the interior of its passenger compartment, and to send representative signals of such mixed images to the virtual reality goggles (G) to display same.

The invention also relates to a method and a computer program for generating an immersive driving experience of an actual vehicle in a virtual environment.

## Description

### Technical field

The present invention relates, in a first aspect, to a system for generating an immersive driving experience of an actual vehicle in a virtual environment, which allows safe driving of the actual vehicle.

In a second aspect, the present invention relates to a method for generating an immersive driving experience of an actual vehicle in a virtual environment.

A third aspect of the present invention relates to a computer program, adapted to implement the method steps of the second aspect.

### State of the art

Systems are available that include the features of the preamble of claim 1.

In such known systems, the state of the actuators of the actual vehicle (for example, the steering wheel) is detected and such state is subsequently represented in the virtual environment. This provides delays in offering such information on the state of the actuators to the driver, which makes driving the actual vehicle very difficult, and may make it impossible or very dangerous in the case of sports driving.

It is, therefore, necessary to offer an alternative to the state of the art that covers the gaps found therein, by providing a system for generating an immersive driving experience of an actual vehicle in a virtual environment that does not suffer from the known drawbacks, and in particular dispenses with such delays to make driving the actual vehicle safer, even in the case of sports driving.

### Description of the invention

To this end, the present invention relates to a system for generating an immersive driving experience of an actual vehicle in a virtual environment, which comprises:
- a first positioning unit, configured to detect the positions adopted by said actual vehicle while circulating through an actual environment;
- virtual reality goggles (virtual reality goggles being understood as any virtual reality device portable by a user that blocks direct vision of the outside world), configured to display said virtual environment on a screen thereof;
- a second positioning unit, configured to detect at least the relative position of said virtual reality goggles with respect to the actual vehicle; and
- at least one computational entity operatively connected with said first and second positioning units, and with said virtual reality goggles, and configured to generate said virtual environment and send representative signals of the same to the virtual reality goggles to be displayed via the screen of said virtual reality goggles.

Unlike the systems of the state of the art, in the one proposed by the present invention:
- the virtual reality goggles, or an element attached without movement relative thereto, comprise image acquisition means configured and arranged to acquire images of the actual vehicle or of the interior of a passenger compartment thereof, according to the same field of vision that the wearer of said virtual reality goggles;
- the at least one computational entity is also operatively connected to said image acquisition means to receive the images acquired by the same, or representative signals thereof, and configured to:
- generate mixed images that combine those related to said virtual environment, representing elements external to the actual vehicle, with said acquired images (as they are acquired) or with representative images thereof (for example, images collected after applying some treatment or filter to those acquired, to give the sensation of virtualisation), representing elements of the actual vehicle or of the interior of the passenger compartment of the same, and
- send representative signals of said mixed images to the virtual reality goggles so that they display same on said screen.

Thus, it is possible to reduce the delay experienced by state of the art systems that generate only virtual images. These systems known in the state of the art comprise steps of acquiring and determining the state or position of control elements of the actual vehicle (such as a steering wheel or a gearbox), and/or steps of acquiring and determining the state of indicator elements of the actual vehicle (such as screens or buttons arranged on the instrument panel), and the generation of a coherent virtual environment taking into account the relative position of said indicator elements and/or control elements with respect to the virtual reality goggles.

According to a preferred embodiment, the image acquisition means are configured and arranged to acquire images of control elements of the actual vehicle, including at least the handlebar or steering wheel thereof (and, optionally, the gear lever, the brake pedal or lever, or the acceleration pedal or lever), according to the same field of vision as the wearer of said virtual reality goggles.

By acquiring images of such control elements and displaying them directly (or after the processing or filtering mentioned above) on the screen of the virtual reality goggles, the delay experienced by state of the art systems, which need to detect the state of the actuators by means of a sensor and then generate a virtual representation of the same, is considerably reduced.

For an exemplary embodiment, the image acquisition means are configured and arranged to acquire images of indicator elements of the actual vehicle, including at least one dashboard, according to the same field of vision as the wearer of the virtual reality goggles.

According to an exemplary embodiment, the image acquisition means are configured and arranged to acquire images of structural elements of the interior of the passenger compartment of the actual vehicle, including the pillars of the actual vehicle, according to the same field of vision as the wearer of the virtual reality goggles.

It is important to highlight that, in a driving situation, and especially a sports driving situation, the driver of the vehicle must perceive without delay not only that the dynamics of the actual vehicle are consistent with the virtual images represented through the virtual reality goggles, but also the state of the control elements, the indicator elements and/or the structural elements is consistent with said represented virtual images.

For an exemplary embodiment, the at least one computational entity is configured to:
- identify, in the acquired images, first image regions that display window panes that separate the passenger compartment of the actual vehicle from said actual environment and/or rear-view mirrors;
- generate virtual images corresponding to portions of the virtual environment based on the positioning signals received by said first and second positioning units; and
- generate said mixed images, providing therein said generated virtual images, overlaid on said first image regions or on representative image regions of said first image regions, or replacing the first image regions or representative image regions thereof.

According to an exemplary embodiment, the at least one computational entity is configured to:
- identify, in the acquired images, second image regions that do not include the first image regions; and
- generate said mixed images, providing therein portions of said acquired images corresponding to that which is displayed in the second image regions or portions of representative images thereof.

For an exemplary embodiment, the image acquisition means are also configured to determine the actual relative distance with respect thereto of the objects the image of which is acquired represented in the acquired images and to provide representative signals of said determined distance to the at least one computational entity, the at least one computational entity being configured to carry out said identification of at least said first image regions using the information contained in said representative signals of said determined relative distance and that which is provided by the second positioning unit.

According to an implementation of said exemplary embodiment, the at least one computational entity is configured to identify, in the acquired images, intermediate objects located between the image acquisition means and the window panes and/or the rear-view mirrors, comparing a relative theoretical distance for the location of the window panes and/or rear-view mirrors with a relative actual distance with respect to the image acquisition means, determining that if the relative actual distance is less than the relative theoretical distance, there are intermediate objects.

For an exemplary embodiment, the image acquisition means are also configured to determine the relative actual distance with respect thereto of the objects (which in this case are not the windows or rear-view mirrors) the image of which is acquired represented in the acquired images and to provide representative signals of said determined distance to the at least one computational entity, the at least one computational entity being configured to carry out said identification of at least said second image regions using the information contained in said representative signals of said determined relative distance and that which is provided by the second positioning unit.

According to an implementation of said exemplary embodiment, the at least one computational entity is configured to identify, in the acquired images, intermediate objects located between the image acquisition means and the objects the image of which is acquired represented in the acquired images, comparing a relative theoretical distance for the location of such objects with a relative actual distance with respect to the image acquisition means, determining that if the relative actual distance is less than the relative theoretical distance, there are intermediate objects.

For an exemplary embodiment, the at least one computational entity is configured to:
- determine, in the acquired images, subregions of the first image regions that display the portions of the window panes and/or rear-view mirrors that are not hidden by one or more of the identified intermediate objects; and
- generate the mixed images, providing therein portions corresponding to the virtual images of the virtual environment, overlaid on said subregions or on representative image regions of said subregions, or replacing said subregions or representative image regions thereof.

In this way, the generation of a mixed environment coherent with reality is achieved but reducing the delay experienced by state of the art systems that generate only virtual images. These mixed images generated allow the wearer of the virtual reality goggles to visualise intermediate objects, such as their own hands or arms, another occupant of the vehicle, etc.

According to an exemplary embodiment of the system of the first aspect of the present invention, the second positioning unit comprises:
- detectable elements arranged in the virtual reality goggles, or in an attached element without relative movement thereto; and
- a detection device including, in operative connection with the at least one computational entity, a processing unit and, in operative connection therewith, detector elements configured to be arranged on a structure of the actual vehicle pointing towards the location intended to be occupied by said detectable elements when the wearer of the virtual reality goggles occupies their seat in the actual vehicle, and which are configured to detect at least the position of said detectable elements, said processing unit being configured to determine the relative position and the movement of the virtual reality goggles with respect to the actual vehicle based on the detections of the position of the detectable elements.

For an implementation of said exemplary embodiment, the detector elements comprise at least infrared light receivers and the detectable elements are passive and/or active infrared markers.

According to a variant of said embodiment, the detector elements also comprise infrared light emitters configured to emit infrared light towards said passive infrared markers.

For an exemplary embodiment, the detector elements comprise at least one infrared light chamber that comprises the infrared light receivers.

According to an exemplary embodiment of the system of the first aspect of the present invention, the second positioning unit also comprises detectable elements configured to be arranged at fixed points of the structure of the actual vehicle, said detecting elements being configured to, when installed in said structure of the actual vehicle, also point towards the location of said fixed points and to detect at least the position of the detectable elements arranged therein, and said processing unit being configured to determine the positions of said fixed points, taking said positions as a reference, and isolate the relative position and movement of the virtual reality goggles with respect to the actual vehicle based on said references. Taking as a reference detectable elements arranged at fixed points of the structure of the vehicle simplifies the detection of the relative position of said virtual reality goggles with respect to the actual vehicle.

For an exemplary embodiment, the second positioning unit also comprises an inertial measurement unit arranged in the virtual reality goggles, or in an attached element without relative movement thereto, and configured to determine the position and movement of the virtual reality goggles with respect to the actual environment.

According to an implementation of said exemplary embodiment, the at least one computational entity is configured to detect that the actual vehicle is stationary or in motion based on the positioning signals received from the first positioning unit, and also to, when the actual vehicle is stationary, use signals provided by the inertial measurement unit to generate the virtual environment taking into account the position and movement of the virtual reality goggles determined with respect to the actual environment.

For an exemplary embodiment, the at least one computational entity is configured to, when it detects that the actual vehicle is in motion, use signals received from the processing unit of the detection device about the relative position and movement of the virtual reality goggles with respect to the actual vehicle provided (and, optionally, also signals received from the inertial measurement unit) and signals received from the first positioning unit about the positions adopted by the actual vehicle while circulating through the actual environment, to isolate the movements/accelerations of the virtual reality goggles within the actual vehicle from the movements/accelerations of the actual vehicle, to generate the virtual environment coherent with the movements of the actual vehicle and the virtual reality goggles.

According to an exemplary embodiment, the virtual reality goggles comprise an eye tracker, in operative connection with the at least one computational entity, and configured to detect and track the position and movement of the eyes of the wearer of the virtual reality goggles, and the at least one computational entity is configured to also use signals received from said eye tracker to generate the virtual environment coherent with the position and movements of said eyes.

For an exemplary embodiment, the system of the first aspect of the present invention comprises at least one speaker or headphones operatively connected to the at least one computational entity, which is configured to generate and emit, through said at least one speaker or headphones, sounds related to the immersive experience of driving the actual vehicle in the virtual environment.

According to an exemplary embodiment, the first positioning unit comprises at least one of:
- a differential GPS system comprising at least one fixed antenna to be arranged in the actual vehicle,
- sensors to be arranged in the actual vehicle, configured to read or detect parameters of the actual vehicle, including wheel speed and angular position of the steering wheel; and
- an inertial measurement unit to be arranged in the actual vehicle, and configured to determine the position and movement of the actual vehicle with respect to the actual environment.

In an implementation of said exemplary embodiment, the differential GPS system also comprises a fixed antenna to be arranged in the actual environment, the first positioning unit being configured to determine the relative position of the fixed antenna arranged in the actual vehicle taking the position of the fixed antenna arranged in the actual environment as a reference. Taking as a reference the position of the antenna arranged at a fixed point in the actual environment simplifies the detection of the positions adopted by said actual vehicle while circulating through an actual environment.

For an exemplary embodiment, the at least one computational entity is configured to generate predictions of the positions that the actual vehicle will adopt while circulating through the actual environment based on historical data provided by at least the aforementioned sensors to be arranged in the actual vehicle.

According to an implementation of said exemplary embodiment, the at least one computational entity is configured to use the results of said predictions to generate mixed images for a current instant and mixed images for subsequent instants linked to those of said predictions. Thus, the frequency of position data collection by the differential GPS system (example of 100 ms) is greater than the frequency at which virtual images of the virtual environment are generated. In this way, the prediction of said positions to be occupied by the actual vehicle collected from positioning data collected by the differential GPS system allows a more updated generation of said virtual environment to be displayed via the screen of the virtual reality goggles.

For an exemplary embodiment, the system of the first aspect of the present invention further comprises the actual vehicle, one or more of the components described above being configured to be arranged in the actual vehicle, physically arranged in the actual vehicle, depending on the implementation of said exemplary embodiment.

According to an exemplary embodiment, the at least one computational entity and said virtual reality goggles are configured to operate in real time ("real time" being understood as that which comprises a latency less than 100Hz, or close to real time), to generate, update and display the mixed images on the screen of the virtual reality goggles based on the positioning signals received by the first and second positioning units.

The at least one computational entity and processing units explicitly described herein, and, optionally, other that are not described but implicit for the components/elements of the system of the first aspect of the present invention, are implemented in different ways, depending on the exemplary embodiment, all of which may form a single computational or processing entity, located inside the actual vehicle or in a remote location, or several computational and/or distributed processing entities/units, all located inside the actual vehicle or some inside the actual vehicle and other(s) in a remote location.

In a second aspect, the present invention concerns a computer-implemented method for generating an immersive driving experience of an actual vehicle in a virtual environment, which comprises:
- collecting representative data of the positions adopted by said actual vehicle while circulating through an actual environment;
- collecting representative data of the relative position of virtual reality goggles with respect to the actual vehicle; and
- generating a virtual environment and representative signals thereof, and send said representative signals to said virtual reality goggles to be displayed via the screen of said virtual reality goggles.

Unlike the methods of the state of the art, the one proposed by the present invention comprises:
- receiving images of the actual vehicle or of the interior of a passenger compartment thereof acquired by image acquisition means comprised by said virtual reality goggles, or by an attached element without relative movement thereto, or representative signals thereof, said image acquisition means being configured to acquire images according to the same field of vision as the wearer of said virtual reality goggles;
- generating mixed images that combine those related to said virtual environment, representing elements external to the actual vehicle, with said acquired images or with representative images thereof, representing elements of the actual vehicle or of the interior of the passenger compartment of the same, and
- send representative signals of said mixed images to the virtual reality goggles so that they display same on said screen.

According to some embodiment examples, the method of the second aspect of the present invention comprises carrying out the steps corresponding to the functions for the performance of which the at least one computational entity of the system is configured according to any one of the exemplary embodiments described above and in subsequent sections of this document.

In a third aspect, the present invention relates to a computer program, comprising code instructions that when executed on at least one processor implement the steps of the method of the second aspect.

### Brief description of the drawings

The foregoing and other advantages and features will be better understood based on the following detailed description of several exemplary embodiments in reference to the attached drawings, which must be interpreted in an illustrative and non-limiting manner and in which:
Figure 1 is a schematic representation of the system proposed by the first aspect of the present invention.
Figure 2 schematically displays a mixed image generated by the system, method, and computer program of the present invention, for an exemplary embodiment.

### Detailed description of exemplary embodiments

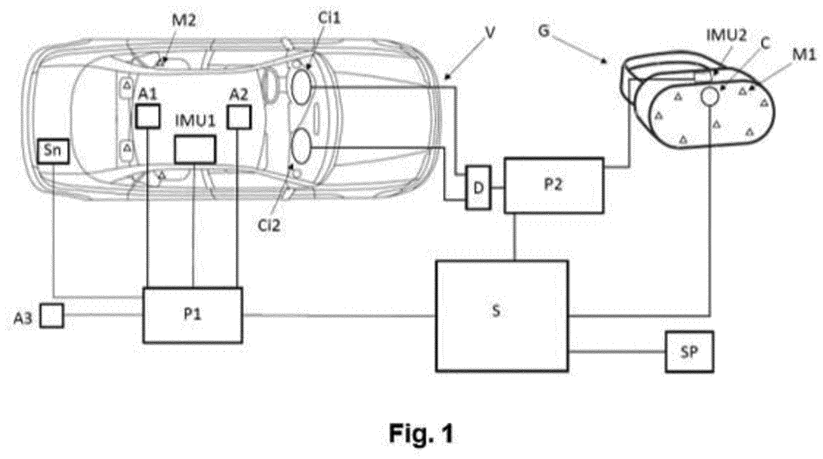

Figure 1 displays the system proposed by the first aspect of the present invention, for an exemplary embodiment, for which the actual vehicle is a car (for other exemplary embodiments, not illustrated, this could be of another type, such as a motorcycle or a truck) and the system comprises:
- a first positioning unit P1, configured to detect the positions adopted by the actual vehicle V while circulating through an actual environment, and therefore monitor its evolution;
- virtual reality goggles G configured to display the virtual environment on a screen thereof;
- a second positioning unit P2, configured to detect at least the relative position of said virtual reality goggles G with respect to the actual vehicle V; and
- a computational entity S operatively connected with the first P1 and second P2 positioning units, and with the virtual reality goggles G, and configured to generate the virtual environment and send to the virtual reality goggles G representative signals thereof to be displayed via the screen of said virtual reality goggles G.

In general, the computational entity S has memorised the different virtual circuits or scenarios, and generates and renders the virtual environment through which the vehicle circulates based on the position of the actual vehicle V1 and the position of the virtual reality goggles G (and therefore of its wearer) within the actual vehicle V.

As seen in Figure 1, the virtual reality goggles G, or an attached element without relative movement thereto, comprise image acquisition means C, such as one or more cameras.

Although in Figure 1, the virtual reality goggles G have been illustrated schematically outside the actual vehicle V, in the use situation they are worn by an occupant of the actual vehicle V, the image acquisition means C being configured and arranged (in this case, in a frontal region of the goggles G) to, in that use situation, acquire images of the actual vehicle V or of the interior of a passenger compartment thereof, according to the same field of vision as the wearer of the virtual reality goggles G.

The computational entity S is also operatively connected to the image acquisition means C to receive the images acquired by the same, or representative signals thereof, and configured to:
- generate mixed images that combine those related to said virtual environment, representing elements external to the actual vehicle V, with said acquired images or with representative images thereof (for example, images collected after applying some treatment or filter to those acquired, to give the sensation of virtualisation), representing elements of the actual vehicle V, in this case the interior of the passenger compartment of the same, and
- send representative signals of such mixed images to the virtual reality goggles G so that they display same on their screen.

According to an exemplary embodiment, the image acquisition means C are configured and arranged to acquire images of control elements of the actual vehicle V, such as the steering wheel thereof, as well as indicator elements, such as a speedometer or revolution counter, and structural elements, such as a dashboard or an A-pillar, inside the passenger compartment of the actual vehicle V, according to the same field of vision as the wearer of the virtual reality goggles G. In this way, the field of vision captured by the image acquisition means C varies with the movement of the wearer's head, coinciding with the field of vision that the wearer would see without the virtual reality goggles G.

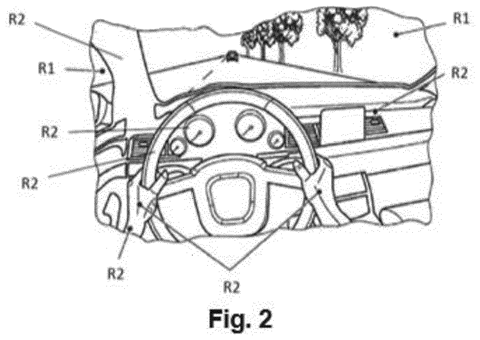

Figure 2 illustrates an example of a mixed image generated by the system of the present invention, which displays a representative image of the acquired image of the aforementioned steering wheel, indicators and structural elements, as well as other elements, such as the hands and part of the driver's arms, all displayed according to the same field of vision as the wearer of the virtual reality goggles G, in this case the driver of the actual vehicle V.

According to the present invention, the computational entity S is configured to:
- identify, in the acquired images, first image regions R1 that display windows that separate the passenger compartment of the actual vehicle V from the actual environment and/or rear-view mirrors;
- generate virtual images corresponding to portions of the virtual environment based on the positioning signals received by the first P1 and second P2 positioning units; and
- generate the mixed images, providing therein the generated virtual images, overlaid on the first image regions R1 or on representative image regions of the first image regions R1, or replacing the first image regions R1 or representative image regions thereof.

The mixed image of Fig. 2 displays several of such first regions R1, in particular related to the windows of the vehicle (windshield and left front window portion), which are occupied by the corresponding virtual images generated, thus displaying to the wearer of the virtual reality goggles G the virtual environment that it sees through such windows, that is, the aforementioned portions of the virtual environment. Thus, what is represented in the virtual environment through the windows/window panes or in the rear mirrors of the vehicle, evolves as the actual vehicle V does in reality. In this way, it can be simulated that the V vehicle is circulating in a completely different environment.

The identification of the first image regions R1 can be carried out by means of algorithms trained to identify certain patterns of the images acquired by the image acquisition means C. For example, geometric patterns of the frames of window panes and windows can be identified, as well as how to identify representative colours of said frames, in order to establish the limits of said first image regions R1 or representative image regions thereof.

The computational entity S is also configured to:
- identify, in the acquired images, second image regions R2 that do not include the first image regions R1; and
- generate the mixed images, providing therein portions of such acquired images corresponding to that which is displayed in the second image regions R2 or of representative image portions thereof.

The mixed image of Figure 2 also shows several of such second regions R2, which are occupied by the corresponding representative images of the acquired images, in particular of the steering wheel, indicators, dashboard, seat portions, structural elements (such as the pillar between the windshield and the left front window), the driver's hands and part of the arms, etc., that is, everything that is inside the passenger compartment and is not the window pane nor the rear-view mirrors.

For the illustrated embodiment, as seen in Figure 1, the second positioning unit P2 comprises:
- detectable elements M1, such as passive and/or active infrared markers, arranged in the virtual reality goggles G (or in an attached element without relative movement thereto); and
- a detection device D including, in operative connection with the computational entity S, a processing unit and, in operative connection therewith, detector elements Ci1, Ci2 that are arranged on a structure of the actual vehicle V, in this case on the dashboard, pointing towards the location intended to be occupied by the detectable elements M1 when the wearer of the virtual reality goggles G takes their place in the actual vehicle V, and which are configured to detect the position of the detectable elements M1, the processing unit being configured to determine the relative position and movement of the virtual reality goggles G with respect to the actual vehicle V based on the detections of the position of the detectable elements M 1.

Preferably, the detector elements Ci1, Ci2 comprise infrared light cameras Ci1, Ci2 (such as the OptiTrack brand motion capture cameras) that receive the infrared light coming from the infrared markers M1, emitted by them, if they are active, or reflected by the same if they are passive, in which case the detector elements Ci1, Ci2 also comprise infrared light emitters configured to emit infrared light towards the passive infrared markers M1.

For the exemplary embodiment illustrated in Figure 1, the second positioning unit P2 also comprises detectable elements M2 (such as passive or active infrared markers), which are arranged at fixed points of the structure of the actual vehicle V, the detector elements Ci1, Ci2 being configured to also point towards the location of such fixed points and to detect the position of the detectable elements M2 arranged therein, and said processing unit being configured to determine the positions of such fixed points, taking said positions as a reference, and isolate the relative position and movement of the virtual reality goggles G with respect to the actual vehicle V based on said references.

Advantageously, the image acquisition means C are also configured to determine the actual relative distance with respect thereto of the objects the image of which is acquired represented in the acquired images, for example by triangulation, and to provide representative signals of such determined relative actual distance to the computational entity S, the computational entity S being configured to carry out the identification of the first R1 and second R2 image regions using the information contained in such representative signals of the determined relative distance and that which is provided by the second positioning unit P2.

The computational entity S is configured to identify, in the acquired images, intermediate objects (in some cases, also including people) located between the image acquisition means C and the objects the image of which is acquired represented in the acquired images including but, in general, not only that of the window panes and/or rear-view mirrors, comparing a relative theoretical distance for the location of such objects with a relative actual distance with respect to the image acquisition means C, determining that if the relative actual distance is less than the relative theoretical distance there are intermediate objects.

In the event of presence of such intermediate objects (seat, co-pilot, etc.), the computational entity S is configured to:
- determine, in the acquired images, subregions of the first image regions R1 that display the portions of the window panes and/or rear-view mirrors that are not hidden by one or more of the identified intermediate objects; and
- generate the mixed images, providing therein portions corresponding to the virtual images of the virtual environment, overlaid on such subregions or on representative image regions of such subregions, or replacing the subregions or representative image regions thereof.

Thus, for an exemplary embodiment, the computational entity S has a 3D map of the actual vehicle R. This 3D map has clearly defined window areas, or first regions R1, in which the images of the virtual environment are going to be overlaid/replaced, to give the sensation that virtual content is displayed through the windows.

Through the second positioning system P2, the relative position of the virtual reality goggles G with respect to the interior of the actual vehicle R (and specifically with respect to the window areas) is known.

As described above, the virtual reality goggles G have cameras or image acquisition means C that, for example by triangulation based on the information captured by two cameras, allow the distance from the objects it captures to be known. Thus, there is a processing of the image captured by the cameras that makes it possible to know:
- Areas with similar visual properties (for example, vehicle interior linings)
- Distance of said areas with respect to the glasses

Taking into account the 3D map of the vehicle plus the position of the virtual reality goggles G, that which is previously identified as relative theoretical distance, where said areas should be, is collected. Therefore, the relative position in which the window area, or first R1 regions, should be, is known. The window areas are identified in the captured image and are those where the virtual environment layer will be overlaid/replaced.

Furthermore, the aim is to identify that there are no intermediate objects, which is carried out as described above, that is, by comparing the relative actual distance with the relative theoretical distance. If such distances are equal, it means that there are no intermediate objects. The overlay/replacement will be performed only in those areas (similar visual properties) where the relative theoretical and relative actual distance coincide. In the case that no intermediate objects are identified, the overlay/replacement is performed on the first R1 regions completely.

All of this is used to isolate the window areas and add the virtual image layer, through mixed reality.

Thus, it makes it possible to know if there are co-pilots, the arms of the wearer of the virtual reality goggles G and other intermediate objects. The theoretical distance relative to windows (3D) is known and information with certain visual properties is detected at a shorter distance, associated with an intermediate object such as a seat (the image of which is represented as it has been acquired or previously processed/filtered), and the virtual environment is projected behind such intermediate object.

As can be seen, in Figure 1, the second positioning unit P2 also comprises an inertial measurement unit IMU2 arranged in the virtual reality goggles G, or in an attached element without relative movement thereto, and configured to determine the position and the movement of the virtual reality goggles G with respect to the actual environment. Specifically, the inertial measurement unit IMU2 is configured to determine instantaneous data of three linear accelerations of the vehicle and three angular velocities (roll, pitch, yaw).

Thus, for an exemplary embodiment, the computational entity S is configured to detect that the actual vehicle V is stationary or in motion based on the positioning signals received from the first positioning unit P1, and also to, when the actual vehicle V is stationary, use signals provided by the inertial measurement unit IMU2 to generate the virtual environment taking into account the position and movement of the virtual reality goggles G determined with respect to the actual environment. As there is no movement of the actual vehicle V, all movements and accelerations detected by the inertial measurement unit IMU2 will be equivalent to the movement of the head of the wearer of the virtual reality goggles G. The data determined by the inertial measurement unit IMU2 will be sufficient to determine the changes in position of the head over time and, thus, be able to generate the virtual environment in accordance thereto.

Instead, the computational entity S is configured to, when it detects that the actual vehicle V is in motion, use signals received from the processing unit of the detection device D about the relative position and movement of the virtual reality goggles G with respect to the actual vehicle V provided and signals received from the first positioning unit P1 about the positions adopted by the actual vehicle V while circulating through the actual environment, to isolate the movements/accelerations of the virtual reality goggles G within the actual vehicle V from the movements/accelerations of the actual vehicle V, to generate the virtual environment coherent with the movements of the actual vehicle V and the virtual reality goggles G.

For the illustrated embodiment, the system comprises one or more speakers or headphones SP operatively connected to the computational entity S, which is configured to generate and emit, through such speakers or headphones SP, sounds (e.g. collisions, bonuses, etc.) related to the immersive experience of driving the actual vehicle V in the virtual environment.

Advantageously, the system includes an audio system that includes headphones and microphone for both the driver and co-pilot, so that they can communicate directly, and the sounds (e.g. collisions, bonuses, etc.) related to the immersive experience of driving the actual vehicle V in the virtual environment is also emitted in the co-pilot's headphones. Thus, if there is a collision in the virtual world, a virtual sound is generated that will be emitted through the headphones of both the pilot and the co-pilot.

As regards the first positioning unit P1, for the illustrated exemplary embodiment, same comprises:
- a differential GPS system that comprises two fixed antennas A1, A2 arranged in the actual vehicle V (to capture the instantaneous position of the vehicle) and a fixed antenna A3 to be arranged in the actual environment (to gain precision with instantaneous position coordinates of a fixed point), the first positioning unit P1 being configured to determine the relative position of the two fixed antennas A1, A2 arranged in the actual vehicle V taking the position of the fixed antenna A3 arranged in the actual environment as a reference;
- sensors Sn (schematically illustrated by a single block) arranged in the actual vehicle V, configured to read or detect parameters of the actual vehicle V, including, for example, odometry data, such as wheel speed and steering wheel angular position, vehicle size, vehicle type and/or model (e.g. of the type with Ackermann steering geometry), conversion ratios (e.g. wheel encoder detections versus speed), etc.; and
- an inertial measurement unit IMU1 arranged in the actual vehicle V, and configured to determine the position and movement of the actual vehicle V with respect to the actual environment, in particular providing instantaneous data of three linear accelerations of the vehicle and three angular velocities (roll, pitch, yaw).

In order to reduce the computing time of the virtual environment generation, the computational entity S is configured to generate predictions of the positions that the actual vehicle V will adopt while circulating through the actual environment based on the data provided by at least said sensors Sn and historical data on how the dynamics of the actual vehicle V varies depending on said data provided by the at least one sensor Sn.

Thus, by fusing different types of signals (IMU1, IMU2, GPS, Sn, D) the position and state of the actual vehicle V is accurately collected, but a prediction can also be made regarding the place toward which the actual vehicle V would be evolving.

In this way, there is actual data provided by the differential GPS system and, among said actual data, prediction data equivalent to intermediate positions calculated by means of the different signals of the inertial measurement unit IMU1 and/or the sensors Sn are collected. The computational entity S is configured to use the results of such predictions to generate mixed images for a current instant and mixed images for subsequent instants linked to those of said predictions, that is, to generate the instantaneous virtual environment (knowing what to display through the window panes and/or rear-view mirrors, that is, in the first regions R1), but also to be able to prepare the following moments of the virtual environment.

A person with skill in the art will be able to introduce changes and modifications in the described embodiments without departing from the scope of the invention as it is defined in the attached claims.

## Claims

1. A system for generating an immersive driving experience of an actual vehicle (V) in a virtual environment, comprising:
- a first positioning unit (P1), configured to detect the positions adopted by said actual vehicle (V) while circulating through an actual environment;
- virtual reality goggles (G) configured to display said virtual environment on a screen thereof;
- a second positioning unit (P2), configured to detect at least the relative position of said virtual reality goggles (G) with respect to the actual vehicle (V); and
- at least one computational entity (S) operatively connected with said first (P1) and second (P2) positioning units, and with said virtual reality goggles (G), and configured to generate said virtual environment and send representative signals thereof to the virtual reality goggles (G) to be displayed via the screen of said virtual reality goggles (G),
**characterised in that**:
- said virtual reality goggles (G), or an attached element without relative movement thereto, comprise image acquisition means (C) configured and arranged to acquire images of the actual vehicle (V) or of the interior of a passenger compartment thereof, according to the same field of vision as the wearer of said virtual reality goggles (G);
- said at least one computational entity (S) is also operatively connected to said image acquisition means (C) to receive the images acquired by the same, or representative signals thereof, and configured to:
- generate mixed images that combine those related to said virtual environment, representing elements external to the actual vehicle (V), with said acquired images or with representative images thereof, representing elements of the actual vehicle (V) or of the interior of the passenger compartment of the same, and
- send representative signals of said mixed images to the virtual reality goggles (G) so that they display same on said screen.

2. The system for generating an immersive driving experience of an actual vehicle (V) in a virtual environment, according to claim 1, wherein said at least one computational entity (S) is configured to:
- identify, in the acquired images, first image regions (R1) that display window panes that separate the passenger compartment of the actual vehicle (V) from said actual environment and/or rear-view mirrors;
- generate virtual images corresponding to portions of the virtual environment based on the positioning signals received by said first (P1) and second (P2) positioning units; and
- generate said mixed images, providing therein said generated virtual images, overlaid on said first image regions (R1) or on representative image regions of said first image regions (R1), or replacing the first image regions (R1) or representative image regions thereof.

3. The system for generating an immersive driving experience of an actual vehicle (V) in a virtual environment, according to claim 2, wherein said at least one computational entity (S) is configured to:
- identify, in the acquired images, second image regions (R2) that do not include the first image regions (R1); and
- generate said mixed images, providing therein portions of said acquired images corresponding to that which is displayed in the second image regions (R2) or portions of representative images thereof.

4. The system for generating an immersive driving experience of an actual vehicle (V) in a virtual environment, according to claim 2 or 3, wherein said image acquisition means (C) are also configured to determine the relative actual distance with respect thereto of the objects, the image of which is acquired, represented in the acquired images and to provide representative signals of said determined relative actual distance to the at least one computational entity (S), the at least one computational entity (S) being configured to carry out said identification of at least said first image regions (R1) using the information contained in said representative signals of said determined relative distance and that which is provided by the second positioning unit (P2).

5. The system for generating an immersive driving experience of an actual vehicle (V) in a virtual environment, according to claim 4, wherein the at least one computational entity (S) is configured to identify, in the acquired images, intermediate objects located between the image acquisition means (C) and said window panes and/or said rear-view mirrors, comparing a relative theoretical distance for the location of the window panes and/or rear-view mirrors with a relative actual distance with respect to the image acquisition means (C), determining that if the relative actual distance is less than the relative theoretical distance, there are intermediate objects.

6. The system for generating an immersive driving experience of an actual vehicle (V) in a virtual environment, according to claim 3, or 4 or 5 when they depend on 3, wherein said image acquisition means (C) are also configured to determine the relative actual distance with respect thereto of the objects, the image of which is acquired, represented in the acquired images and to provide representative signals of said determined distance to the at least one computational entity (S), the at least one computational entity (S) being configured to carry out said identification of at least said second image regions (R2) using the information contained in said representative signals of said determined relative distance and that which is provided by the second positioning unit (P2).

7. The system for generating an immersive driving experience of an actual vehicle (V) in a virtual environment, according to claim 6, wherein the at least one computational entity (S) is configured to identify, in the acquired images, intermediate objects located between the image acquisition means (C) and the objects, the image of which is acquired, represented in the acquired images, comparing a relative theoretical distance for the location of such objects with a relative actual distance with respect to the image acquisition means (C), determining that if the relative actual distance is less than the relative theoretical distance, there are intermediate objects.

8. The system for generating an immersive driving experience of an actual vehicle (V) in a virtual environment, according to claim 6 or 7, wherein the at least one computational entity (S) is configured to:
- determine, in the acquired images, subregions of said first image regions (R1) that display the portions of said window panes and/or rear-view mirrors that are not concealed by one or more of said identified intermediate objects; and
- generate said mixed images, providing therein portions corresponding to the virtual images of the virtual environment, overlaid on said subregions or on representative image regions of said subregions, or replacing said subregions or representative image regions thereof.

9. The system for generating an immersive driving experience of an actual vehicle (V) in a virtual environment, according to any one of the preceding claims, wherein said second positioning unit (P2) comprises:
- detectable elements (M1) arranged in said virtual reality goggles (G), or in an attached element without relative movement thereto; and
- a detection device (D) including, in operative connection with the at least one computational entity (S), a processing unit and, in operative connection therewith, detector elements (Ci1, Ci2) configured to be arranged on a structure of the actual vehicle (V) pointing towards the location intended to be occupied by said detectable elements (M1) when the wearer of the virtual reality goggles (G) occupies their seat in the actual vehicle (V), and which are configured to detect at least the position of said detectable elements (M1), said processing unit being configured to determine the relative position and movement of the virtual reality goggles (G) with respect to the actual vehicle (V) based on the detections of the position of the detectable elements (M1).

10. The system for generating an immersive driving experience of an actual vehicle (V) in a virtual environment, according to claim 9, in which said detector elements (Ci1, Ci2) comprise at least infrared light receivers and said detectable elements (M1) are passive and/or active infrared markers, and wherein said detector elements (Ci1, Ci2) also comprise infrared light emitters configured to emit infrared light towards said passive infrared markers.

11. The system for generating an immersive driving experience of an actual vehicle (V) in a virtual environment, according to claim 9 or 10, wherein said second positioning unit (P2) also comprises an inertial measurement unit (IMU2) arranged in the virtual reality goggles (G), or in an attached element without relative movement thereto, and configured to determine the position and movement of the virtual reality goggles (G) with respect to the actual environment, and wherein the at least one computational entity (S) is configured to detect that the actual vehicle (V) is stationary or in motion based on the positioning signals received from the first positioning unit (P1), and to, when the actual vehicle (V) is stationary, use signals provided by the inertial measurement unit (IMU2) to generate the virtual environment taking into account the position and movement of the virtual reality goggles (G) determined with respect to the actual environment.

12. The system for generating an immersive driving experience of an actual vehicle (V) in a virtual environment, according to any of claims 9 to 11, wherein the at least one computational entity (S) is configured to, when it detects that the actual vehicle (V) is in motion, use signals received from the processing unit of the detection device (D) on the relative position and movement of the virtual reality goggles (G) with respect to the actual vehicle (V) and signals received from the first positioning unit (P1) on the positions adopted by the actual vehicle (V) while circulating through the actual environment, to isolate the movements/accelerations of the virtual reality goggles (G) within the actual vehicle (V) from the movements/accelerations of the actual vehicle (V), to generate the virtual environment coherent with the movements of the actual vehicle (V) and the virtual reality goggles (G).

13. The system for generating an immersive driving experience of an actual vehicle (V) in a virtual environment, according to any one of the preceding claims, wherein said first positioning unit (P1) comprises at least one of:
- a differential GPS system comprising at least one fixed antenna (A1, A2) to be arranged in the actual vehicle (V),
- sensors (Sn) to be arranged in the actual vehicle (V), configured to read or detect parameters of the actual vehicle (V), including wheel speed and steering wheel angular position; and
- an inertial measurement unit (IMU1) to be arranged in the actual vehicle (V), and configured to determine the position and movement of the actual vehicle (V) with respect to the actual environment,
and wherein said differential GPS system also comprises a fixed antenna (A3) to be arranged in the actual environment, said first positioning unit (P1) being configured to determine the relative position of the fixed antenna arranged in the actual vehicle (V) taking the position of the fixed antenna (A3) arranged in the actual environment as a reference.

14. A computer-implemented method for generating an immersive driving experience of an actual vehicle (V) in a virtual environment, comprising:
- collecting representative data of the positions adopted by said actual vehicle (V) while circulating through an actual environment;
- collecting representative data of the relative position of virtual reality goggles (G) with respect to the actual vehicle (V); and
- generating a virtual environment and representative signals thereof, and sending said representative signals to said virtual reality goggles (G) to be displayed via the screen of said virtual reality goggles (G),
**characterised in that** it comprises:
- receiving images of the actual vehicle (V) or of the interior of a passenger compartment thereof acquired by image acquisition means (C) comprised by said virtual reality goggles (G), or by an attached element without relative movement thereto, or representative signals thereof, said image acquisition means (C) being configured to acquire images according to the same field of vision as the wearer of said virtual reality goggles (G);
- generating mixed images that combine those related to said virtual environment, representing elements external to the actual vehicle (V), with said acquired images or with representative images thereof, representing elements of the actual vehicle (V) or of the interior of the passenger compartment of the same, and
- sending representative signals of said mixed images to the virtual reality goggles (G) so that they display same on said screen.

15. The computer-implemented method for generating an immersive driving experience of an actual vehicle (V) in a virtual environment, according to claim 14, which comprises carrying out the steps corresponding to the functions for the embodiment of which the at least one computational entity (S) of the system is configured according to any one of claims 1 to 13.

16. A computer program, comprising code instructions that when executed on at least one processor implement the steps of the method according to any one of claims 14 and 15.
